# EUROPÄISCHE PATENTANMELDUNG

(11) **EP 4 610 058 A1**
(43) Veröffentlichungstag der Anmeldung: **03.09.2025**
(21) Anmeldenummer: 25159306.7
(22) Anmeldetag: 21.02.2025
(51) Int. Cl.: B60B 15/28

(54) **RADGEWICHTADAPTEREINHEIT FÜR DIE MONTAGE EINES RADGEWICHTS AN EINEM NUTZFAHRZEUG**

(30) Priorität: 23.02.2024 DE 202024100880 U
(71) Anmelder: Tenwinkel GmbH & Co. KG, 48691 Vreden (DE)
(72) Erfinder: OVERKAMP, Jan-Hendrik, 48691 Vreden (DE)
(74) Vertreter: Tarvenkorn, Oliver

(57) **Zusammenfassung**

Radgewichtadaptereinheit (10') für die Montage eines Radgewichts (30) an einem Nutzfahrzeug, wenigstens umfassend:
- eine Adapterelement (11) mit wenigstens drei, sich radial erstreckenden Ausnehmungen (12, 13);
- mehrere Schiebeelemente (20'), die jeweils radial versetzbar oder verschiebbar in den Ausnehmungen (12, 13) im Adapterelement (11) angeordnet sind und die jeweils wenigstens eine Durchgangsbohrung (24') zur Durchführung eines Befestigungsbolzens aufweisen;
- ein über das Adapterelement (11) vorstehendes Distanzelement (14) mit je einer Befestigungsmittelaufnahme, an der das Radgewicht (30) befestigbar ist.

## Beschreibung

Die Erfindung betrifft eine Radgewichtadaptereinheit für die Montage eines Radgewichts an einem Nutzfahrzeug.

Es ist bekannt, zur Erhöhung der Traktion von Offroad-Nutzfahrzeugen, insbesondere von Traktoren, sogenannte Radgewichte an der Stirnseite eines Rades eines Nutzfahrzeugs, insbesondere an einem Traktorrad, zu befestigen. Das Rad besitzt mehrere Befestigungsbolzen oder die Felge besitzt mehrere Bohrungen, an denen das Radgewicht direkt, oder über eine dazwischen eingefügte Anbauplatte, befestigbar ist. Die Befestigung kann also an der Verbindung zwischen Radnabe und Felge oder auch abgesetzt davon an der Felge erfolgen.

Für die Hersteller der Nutzfahrzeuge wie für die Hersteller der Radgewichte besteht die Schwierigkeit darin, für verschiedene Radtypen und Radgrößen jeweils verschiedene Radgewichte und/oder Anbauplatten herstellen und vorrätig halten zu müssen, da sich die Teilkreise am Rad und am Radgewicht oftmals unterscheiden, ggf. auch die Anzahl der Befestigungspunkte.

Die Aufgabe der vorliegenden Erfindung besteht darin, gleiche Radgewichte an unterschiedlichen Nutzfahrzeugrädern befestigen zu können.

Diese Aufgabe wird durch eine Radgewichtadaptereinheit mit den Merkmalen des Anspruchs 1 gelöst.

Erfindungswesentlich ist, dass die Adapterplatte Ausnehmungen besitzt, die sich in irgendeiner Weise radial von innen nach außen erstrecken. Außerdem sind mehrere Schiebeelemente vorgesehen, die in den Ausnehmungen geführt sind und die Befestigungsbolzen zur Befestigung der Radgewichtadaptereinheit am Rad aufnehmen und die in den Ausnehmungen in verschiedener Weise positionierbar sind, sodass unterschiedliche Teilkreise für die Befestigungsbolzen eingestellt werden können.

Außerdem weist die Adapterplatte Befestigungsaufnahmen für die Radgewichte auf, die direkt oder vorzugsweise über gesonderte Distanzelemente anschraubbar sind. Die Radgewichtadaptereinheit kann dauerhaft am Fahrzeugrad verbleiben, sodass bedarfsweise ein Radgewicht oder ein Paket von mehreren Radgewichten daran angebracht werden kann. Die Einstellung der Teilkreise für die Befestigungsbolzen muss also nur einmal an einem bestimmten Rad vorgenommen werden. Bei Anschaffung eines neuen Fahrzeugs mit anderen Teilkreisdurchmessern der Befestigungsbolzen müssen die Schiebeelemente einmalig in ihrer radialen Position an der Adapterplatte verändert werden, so dass sie an den Teilkreis der Befestigungen am neuen Rad angepasst sind.

Eine bevorzugte Ausführungsform sieht vor, dass sich die Ausnehmungen genau auf einer Radiuslinie nach außen erstrecken. Möglich ist aber auch ein schräger Verlauf.

Bevorzugt erstrecken sich die Ausnehmungen radial vom Außenumfang ausgehend radial nach innen. Dies hat den Vorteil, dass die ringförmige Adapterplatte im Durchmesser kleiner ausgebildet werden kann und innen liegt, während die Schiebeelemente von außen eingesteckt werden und sich aus den Ausnehmungen heraus bis über den aus der Adapterplatte hinweg erstrecken.

Weiterhin sieht eine bevorzugte Ausführungsform vor, dass jeweils zwischen einem Paar von Ausnehmungen, die für die Befestigungselemente vorgesehen sind und die sich jeweils vom Außenumfang aus nach innen erstrecken, eine zusätzliche Ausnehmung ausgebildet ist, welche sich vom Innenumfang ausgehend radial nach außen erstreckt. Damit ergibt sich an der kreisförmigen Adapterplatte eine alternierende Folge von radialen Ausnehmungen, die sich abwechselnd vom Außen- und vom Innenumfang her erstrecken.

Die radiale Tiefe jeder Ausnehmung ist bevorzugt so gewählt, dass sie mehr als die Hälfte der radialen Breite des Kreisrings beträgt, sodass es an der Adapterplatte keine Kreislinie gibt, die nicht durch eine der Ausnehmungen unterbrochen ist. Umgekehrt bedeutet dies, dass es mindestens einen Teilkreis gibt, auf dem die Schiebeelemente wahlweise von innen oder von außen eingeschoben werden können.

Dies bringt mehrere Vorteile:
- möglicherweise bei der Anbringung oder auch erst im späteren Betrieb eingebrachte Spannungen in der Adapterplatte werden abgebaut.
- Bei kleinen Teilkreisdurchmessern können die Schiebeelemente in die inneren Ausnehmungen eingesetzt werden, bei größeren in die äußeren.
- Wenn alle Ausnehmungen in gleichmäßiger Winkelteilung angeordnet sind und die Anzahl der Ausnehmungen der Anzahl der Befestigungsbolzen entspricht, muss z. B. nur jeder zweite Befestigungsbolzen am Rad gelöst werden, um die Radgewichtadaptereinheit über die Schiebeelemente zu befestigen, während die nicht gelösten Befestigungsbolzen in den inneren Ausnehmungen liegen. Dies ist vorteilhaft, wenn die Befestigung direkt an der Radnabe erfolgen muss: da das Rad für die Montage der Radgewichtadaptereinheit nicht vollständig gelöst zu werden braucht, muss das Fahrzeug nicht aufgebockt werden.

Um einen großen Bereich unterschiedlicher Teilkreisdurchmesser mit derselben Adapterplatte abdecken zu können, welche vorzugsweise kreisringförmig ausgebildet ist, ist es vorteilhaft, die Schiebeelemente so auszubilden, dass sie in zwei um 180 Grad zueinander gedrehten Orientierungen in die Ausnehmungen einsetzbar sind. Dabei besitzt das Schiebeelement an wenigstens einer Seite wenigstens eine Durchgangsbohrung für die Befestigungsbolzen und an der anderen Seite eine Bohrung oder eine Gewindebohrung, über die die Verbindung zur Adapterplatte mit einer Klemmschraube fixiert wird, insbesondere durch eine klemmende Verbindung.

Die Befestigung über die Befestigungsbolzen erfolgt bevorzugt an gesonderten Bohrungen an der Felge, die für die Aufnahme von Zubehörteilen vorgesehen sind. Fehlen solche gesonderten Bohrungen kann die Befestigung auch vorgenommen werden, indem einzelne oder alle Radbolzen, welche der Befestigung des Rads an der Nabe der Fahrzeugachse dienen, durch die Durchgangsbohrungen geführt werden.

Die Klemmung über die Schraube und die Gewindebohrung wird vorzugsweise an einer Position bewirkt, die innerhalb der sich radial erstreckenden Nut liegt. Jedoch ist es auch möglich, die Position von Schraube und Gewindebohrung außerhalb der Kontur der Adapterplatte vorzusehen und die Klemmung des Schiebeelements von dort aus zu bewirken. Die Klemmkraft muss zunächst nur so fest sein, dass die Montage der Adapterplatte am Rad erleichtert ist, indem die Position für die Befestigungsbolzen fest ist. Durch Anschrauben der Adapterplatte am Rad wird dann durch den Befestigungsbolzen in der Durchgangsbohrung ein feste, reibschlüssige Verbindung zwischen dem Schiebeelement und er Adapterplatte hergestellt. Danach werden die Klemmschrauben bei der Montage mit demselben Drehmoment angezogen wie die Schrauben an den Durchgangsbohrungen zum Verschrauben an der Felge, damit alles gegen Lösen gesichert ist.

Generell können die Klemmschrauben zunächst nur leicht angezogen werden, um die Radgewichtadaptereinheit voreinzustellen. Die Schiebeelemente werden dennoch auf der vorgesehenen Position gehalten, um die Montage zu erleichtern.

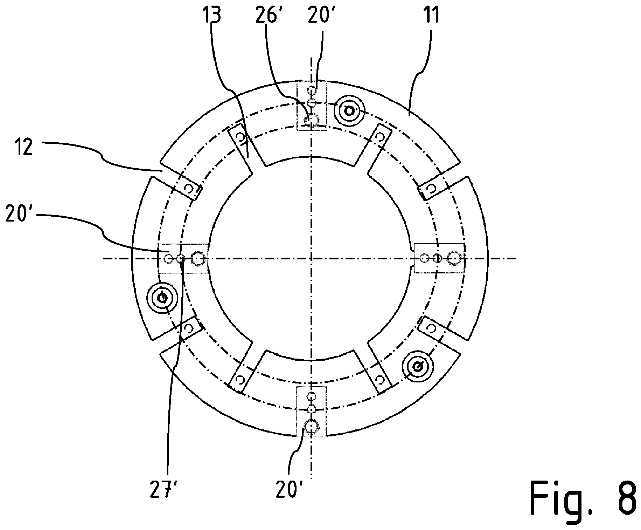

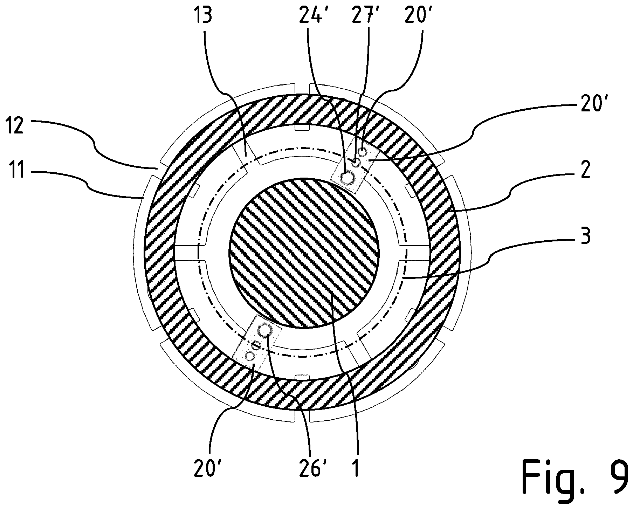

Insbesondere kann vorgesehen sein, wenigstens zwei Durchgangsbohrungen nebeneinander auf dem Schiebeelement vorzusehen, das heißt, die Positionen der Schraube und der Gewindebohrung für die Klemmung befinden sich in einem Endbereich des Schiebeelements, eine Durchgangsbohrung für einen Befestigungsbolzen befindet sich in der Mitte und eine weitere Durchgangsbohrung befindet sich im anderen Endbereich. Durch die zusätzliche Mittenposition können auf derselben Adapterplatte weitere Teilkreise für die Befestigungsbolzen eingestellt werden, wie nachfolgend unter Bezug auf die Figuren 8 und 9 erläutert werden wird.

Durch die Mittenbohrung für bestimmte Lochkreisdurchmesser können zum einen die äußeren Abmessungen der Adapterplatte reduziert werden. Außerdem kann der Innendurchmesser der Adapterplatte größer gewählt werden, da durch die über den Innenrand oder Außenrand hinausragenden Schiebeelemente weitere Positionen außerhalb der Konturen der Adapterplatte erreichbar sind, sofern notwendig.

Dabei kann ein gleicher Abstand zwischen allen drei Bohrungen vorgesehen sein. Je nach Länge des Adapterelements und der Größe der Gewindebohrung und der dazu passenden Schraube werden die Abstände so variiert, dass ein Steckschlüssel oder eine Nuss auf den Kopf der Klemmschraube aufgesetzt werden kann und zugleich ein Befestigungsbolzen in die nächstbenachbarte Bohrung eingesetzt werden kann. Das heißt, der Abstand zwischen Gewindebohrung und benachbarter Durchgangsbohrung ist dann etwas größer als der Abstand zwischen den benachbarten Durchgangsbohrungen untereinander.

Nach einer bevorzugten Ausführungsform der Erfindung ist vorgesehen, dass die Schiebeelemente jeweils einen H-förmigen Querschnitt besitzen, sodass sie an gegenüberliegenden Kanten Führungsnuten aufweisen, mit denen sie auf Führungskanten an den Ausnehmungen der Adapterplatte verschiebbar geführt sind.

Weiterhin ist nach einer bevorzugten Ausführungsform vorgesehen, dass das Schiebeelement zumindest zweiteilig ausgebildet ist, wobei der Abstand zwischen parallelen Flächen an der Führungsnut kleiner ist als die Blechstärke der Adapterplatte im Bereich der radialen Ausnehmungen.

Vorzugsweise besitzt ein Teilelement des Schiebeelements die Querschnittsform eines Nutsteins, während das andere Teilelement plattenförmig ist. Ein oder zwei Durchgangsbohrungen für die Durchführung der Befestigungsbolzen und eine Befestigungsbohrung für eine Klemmschraube erstrecken sich fluchtend durch beide Teilelemente hindurch. Die lichte Weite W der seitlichen Führungsnut entspricht bei einer bevorzugten Ausführungsform der Blechstärke des Adapterelements und ist so gewählt, dass zwischen dem unteren Teilelement und dem oberen Teilelement im Ausgangszustand ein Spalt besteht, damit beim Anziehen der Klemmschraube eine Klemmwirkung zwischen den Teilelementen und der dazwischen eingeschlossenen Adapterplatte erzielt werden kann.

Damit besteht vor der Montage ein Luftspalt zwischen den beiden Teilelementen des Schiebeelements, der sich durch Anziehen einer Klemmschraube reduziert, wodurch die Schiebeelemente reibschlüssig mit der Adapterplatte verbunden werden. Für eine statisch bestimmte Befestigung sieht die Radgewichtadaptereinheit wenigstens drei Ausnehmungen und drei Schiebeelemente vor. Üblicherweise besitzen die Räder jedoch mindestens vier, fünf oder sechs Aufnahmepunkte für ein Radgewicht, an denen jeweils ein Schiebeelement angebracht wird. Durch die größere Anzahl von Befestigungspunkten ist die Zentrierung der Adapterplatte gegenüber dem Rad erleichtert. Wenn alle Befestigungsbolzen, die durch die Bohrungen auf den Schiebeelementen geführt sind, am Rad befestigt sind, bleiben die Klemmschrauben zunächst gelockert, sodass die ringförmige Adapterplatte gegenüber dem Rad exakt zentriert werden kann. Anschließend werden alle Klemmschrauben angezogen, damit die vorgenommene Ausrichtung fixiert ist und eine feste Position für das anschließend anzubringende Radgewicht vorgegeben ist.

Es hat sich heraus gestellt dass eine einfache Montage dadurch möglich ist, dass man die Schiebeelemente vorab voreinstellt, wenn die Adapterplatte oder die ganze Radgewichtadaptereinheit in einer horizontalen Ebene liegt. Nachdem alles eingestellt ist und die Klemmschrauben angezogen sind, damit die Schiebeelemente gegen Verrutschen gesichert sind, kann der Felgenadapter in der Felge montiert werden.

Das Radgewicht wird an wenigstens drei Punkten mit der Adapterplatte verschraubt, vorgesehen ist insbesondere, dass an den drei Befestigungspunkten jeweils ein Distanzelement vorgesehen ist, an dem sich das Radgewicht gegenüber der Adapterplatte abstützt. Da auch das Radgewicht selbst vorzugsweise ringförmig ausgebildet ist, bleibt im Zentrum ein Freiraum offen, auch wenn die Radgewichtadaptereinheit mit dem Radgewicht verbunden ist. Durch den offenen Innenraum können zum Beispiel Verschraubungen am Rad erreicht werden.

Besonders bevorzugt sind die inneren und die äußeren radialen Ausnehmungen gleichartig ausgebildet. Damit ist es möglich, die Schiebeelemente nicht nur von außen her einzusetzen und/oder von außen um 180° verdreht erneut einzusetzen, sondern es ist auch möglich, bei kleinen Teilkreisen an kleinen Rädern die Befestigungselemente vom Innenumfang her einzuschieben und die dann frei bleibenden Außennuten freizulassen. Der Bereich an Teilkreisdurchmessern von Befestigungsbohrungen, die mit derselben Adapterplatte nach der Erfindung abdeckbar sind, wird dadurch vergrößert.

Vorzugsweise ist die Adapterplatte kreisringförmig aus einem plattenförmigen Blechzuschnitt gebildet. Möglich sind aber auch polygonale Formen, insbesondere hexagonale oder oktogonale Formen.

Für die Verschraubung des Radgewichts an der Radgewichtadaptereinheit und für die Verschraubung der Radgewichtadaptereinheit an der Felge bzw. am Rad sind bevorzugt Sicherungsscheiben vorgesehen, um eine sichere kraftschlüssige Verbindung zu gewährleisten. Dabei kann es sich um Spannscheiben nach DIN 6796 VZ und/oder um Keilsicherungsscheiben nach DIN 25201 oder um andersartige, paarweise benutzte Sperrkantscheiben handeln. Diese sichern querbelastete, schwingungsbehaftete und vibrierende Schraubverbindungen effektiv gegen Losdrehen.

Eine Radgewichteinheit wird gebildet, indem die vorstehend beschriebene Radgewichtadaptereinheit der Erfindung mit einem passende Radgewicht kombiniert wird.

Das zugehörige Radgewicht besteht z. B. aus Eisenguss, Stahl, Mineralguss, Schwerbeton oder Beton, um bei üblichen Radgrößen eine hohe Masse zu erreichen, typischerweise 200kg oder 300kg. Es sind einerseits auch leichtere Radgewichte und Radgewichte mit hoher Masse von 600kg bis 1000kg denkbar.

Nachfolgend werden die Dimensionierung und die universellen Verwendungsmöglichkeiten der Radgewichteinheit der Erfindung an einem Beispiel erläutert:
Eine Adapterplatte, mit der viele Radgrößen von landwirtschaftlichen Arbeitsmaschinen abgedeckt werden können, besitzt einen Innendurchmesser von 400 mm und einen Außendurchmesser von 700 mm. Die Breite der ringförmigen Adapterplatte beträgt somit 150 mm. Das dafür vorgesehene Radgewicht besitzt einen Innendurchmesser von 400 mm und einen Außendurchmesser von 800 mm und hat eine Masse von 300 kg.

Die Schiebeelemente können sowohl in den inneren Nuten als auch in den äußeren Nuten verwendet werden, um die verschiedenen Lochkreisdurchmesser zu erreichen, die durch die Bohrungen an der Felge bzw. am Rad vorgegeben sind. Dabei können die Schiebeelemente jeweils um 180° verdreht eingesetzt werden. Außerdem können können die Schiebeelemente einerseits so an den Nuten montiert werden, dass sie vollständig innen an der Adapterplatte liegen, sich also zwischen dem Innenrand und dem Außenrand befinden ("innen"). Andererseits können die Schiebeelemente an den Nuten auch so montiert werden, dass sie mit einem Teil ihrer Länge außerhalb des Innenrands oder des Außenrands positioniert sind und nur teilweise in die Nuten eingreifen ("außen). Somit ergeben sich vier mögliche Ausrichtungen der Schiebeelemente, nämlich:
- Nuten innen - Schiebeelement "innen": Teilkreis Ø340mm bis Ø430mm
- Nuten innen - Schiebeelement "außen": Teilkreis Ø430mm bis Ø550mm
- Nuten außen - Schiebeelement "innen": Teilkreis Ø550mm bis ØØ670mm
- Nuten außen - Schiebeelement "außen": Teilkreis Ø670mm bis Ø760mm

Der insgesamt abgedeckte Bereich nutzbarer Teilkreise beträgt damit in dem Beispiel D= Ø340mm bis Ø760mm. Es kann also jeweils innen wie außen ein um 60 mm gegenüber der ringförmigen Adapterplatte verkleinerter bzw. vergrößerter Teilkreisdurchmesser erreicht werden. Bezogen auf die radiale Ringbreite der Adapterplatte von 150 mm bedeutet das, dass 40% der erreichbaren Teilkreise außerhalb der Kontur der Adapterplatte liegen. Anders gesagt, müsste die Ringbreite der Adapterplatte mindestens 230 mm betragen, damit alle Teilkreise im genannten Bereich zwischen Ø340mm und Ø760mm innerhalb der Fläche der Adapterplatte liegen. Durch die Option, die Schiebeelemente teilweise aus den Nuten heraus ragen zu lassen, kann die Ringbreite der Adapterplatte jedoch auf nur 150 mm begrenzt werden.

Die Erfindung wird nachfolgend mit Bezug auf das in den Zeichnungen dargestellte Ausführungsbeispiel näher erläutert. Die Figuren zeigen im Einzelnen:
- Figur 1: eine Radgewichtadaptereinheit in perspektivischer Ansicht;
- Figur 2: die Radgewichtadaptereinheit in Draufsicht;
- Figur 3: einen Querschnitt durch die Radgewichtadaptereinheit in perspektivischer Ansicht;
- Figur 4: ein Schiebeelement in perspektivischer Ansicht;
- Figur 5: die Radgewichtadaptereinheit mit aufgesetztem Radgewicht in perspektivischer Ansicht;
- Figur 6: das Radgewicht in Draufsicht;
- Figur 7: ein alternatives Schiebeelement in perspektivischer Ansicht;
- Figur 8: die Adapterplatte mit den alternativen Schiebeelementen in Draufsicht ;
- Figur 9: die Adapterplatte mit den alternativen Schiebeelementen in Draufsicht und
- Figur 10: eine Radgewichteinheit mit alternativen Schiebeelementen und mit einem Radgewicht in perspektivischer Ansicht von hinten.

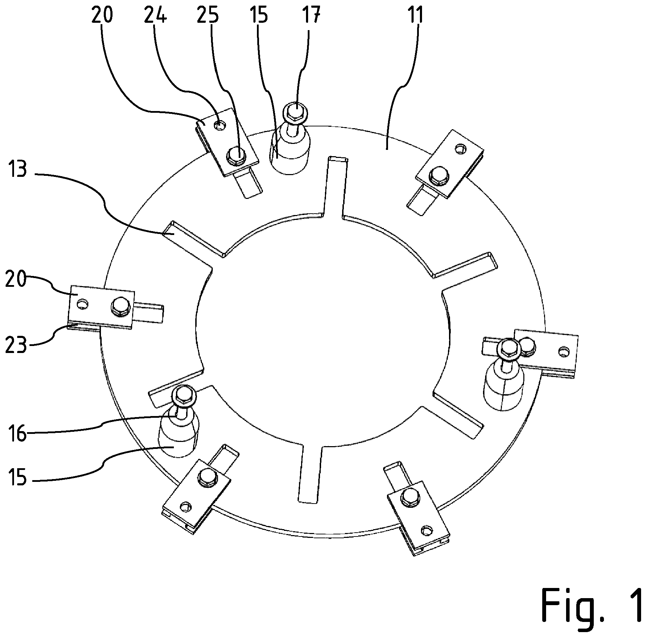

In Figur 1 ist eine Radgewichtadaptereinheit 10 in perspektivischer Ansicht abgebildet. Die Adapterplatte 11 ist in ihrer Grundstruktur kreisringförmig aus einem plattenförmigen Blechzuschnitt gebildet. Vom Innenumfang des Kreisrings her erstrecken sich sechs Ausnehmungen 13 radial nach außen. Von dem Außenumfang her erstrecken sich sechs Ausnehmungen 12 radial nach innen. In ihnen ist jeweils ein Schiebeelement 20 eingesetzt, das eine Durchgangsbohrung 24 für Befestigungsbolzen besitzt, über welche die Verschraubung mit dem Rad erfolgt. Außerdem ist eine Klemmschraube 26 vorgesehen, um das in der Ausnehmung 12 positionierte Schiebeelement 20 festzuklemmen und damit reibschlüssig gegenüber der Adapterplatte 11 zu sichern.

Bei dem in Figur 1 ganz linken Schiebeelement 20 sind seitliche Führungsnuten 23 erkennbar. In diese greifen die Kanten der Ausnehmungen 12 ein, so dass durch die Klemmschraube 26 nur die reibschlüssige Sicherung in radialer Richtung vorgenommen werden muss und darüber hinaus ein Formschluss zwischen dem Schiebeelement 20 und dem Randbereich der Adapterplatte 11 an einer Ausnehmung 12 hergestellt ist.

An drei Positionen sind Distanzelemente 15 auf der Stirnseite der Adapterplatte 11 angebracht. Diese besitzen an ihrer Oberseite jeweils eine Gewindebohrung 16 zur Aufnahme einer Befestigungsschraube 17, über welche das später hinzuzufügende Radgewicht befestigt wird. Der obere Abschnitt der Distanzelemente 15 ist konisch ausgebildet, wobei der größere Durchmesser etwas größer als die zugehörige Vertiefung am Radgewicht ist. Über den konischen Abschnitt wird das Radgewicht zentriert und an den wenigstens drei Befestigungspunkten sicher fixiert.

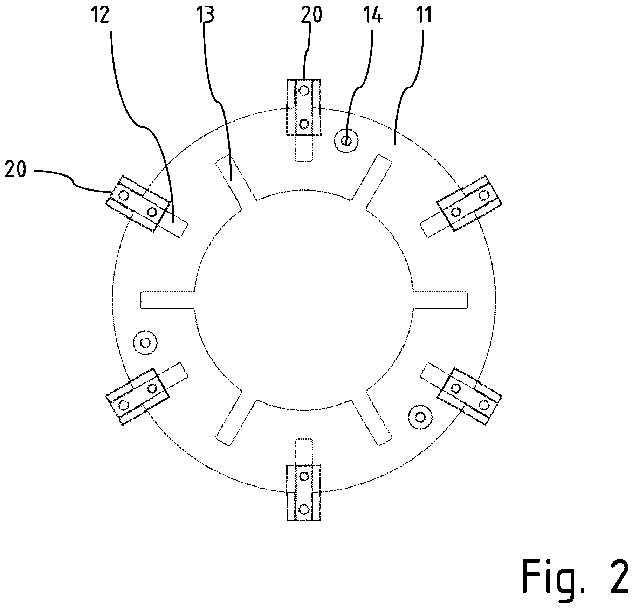

In Figur 2 ist eine Draufsicht auf die Vorderseite des Adapterelements 11 gezeigt, wobei von den Schiebeelementen 20 jeweils ein oberes Teilelement entfernt ist. Sichtbar ist, dass ein Mittelteil der Schiebeelemente 20 genau die Breite der Ausnehmung 12 besitzt, während darunter ein breiterer Abschnitt am Schiebeelement 20 besteht, der sich auf der Oberfläche des Adapterelements 11 abstützt. Die Bohrungen 14 kennzeichnen die Position der Distanzelemente.

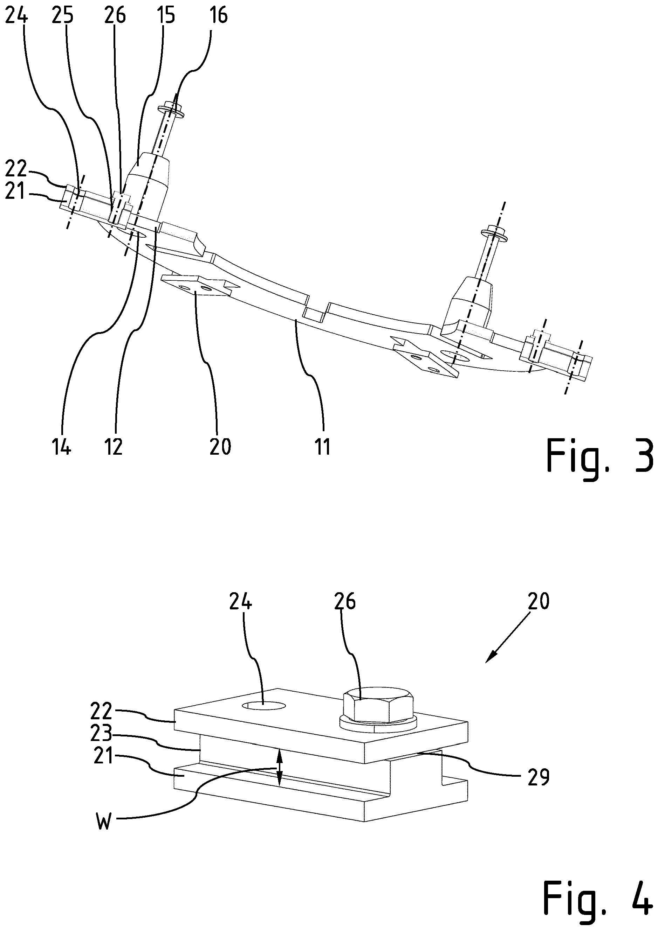

In Figur 3 ist ein Querschnitt durch die Radgewichtadaptereinheit 10 gezeigt, durch den insbesondere die 2-teilige Ausbildung des Schiebeelements 20 deutlich wird. Dieses besitzt ein unteres Teilelement 21 und ein plattenförmiges oberes Teilelemente 22, wobei die Teilelemente 21, 22 über die Klemmschraube 26 miteinander verbunden sind.

In Figur 4 ist eines der Schiebeelemente 20 in einer perspektivischen Ansicht dargestellt. Ein unteres Teilelement 21 besitzt die klassische Querschnittsform eines Nutsteins, während das obere Teilelement 22 plattenförmig ist. Eine Durchgangsbohrung 24 für die Durchführung der Befestigungsbolzen und eine Befestigungsbohrung für die Klemmschraube 26 erstrecken sich fluchtend durch beide Teilelemente 21, 22 hindurch. In Figur 4 ist erkennbar, dass dann, wenn die lichte Breite in der seitlichen Führungsnut 23 der Blechstärke des Adapterelements 10 entspricht, zwischen dem unteren Teilelement 21 und dem oberen Teilelement 22 ein Spalt 29 besteht, damit beim Anziehen der Klemmschraube 26 eine Klemmwirkung erzielt werden kann.

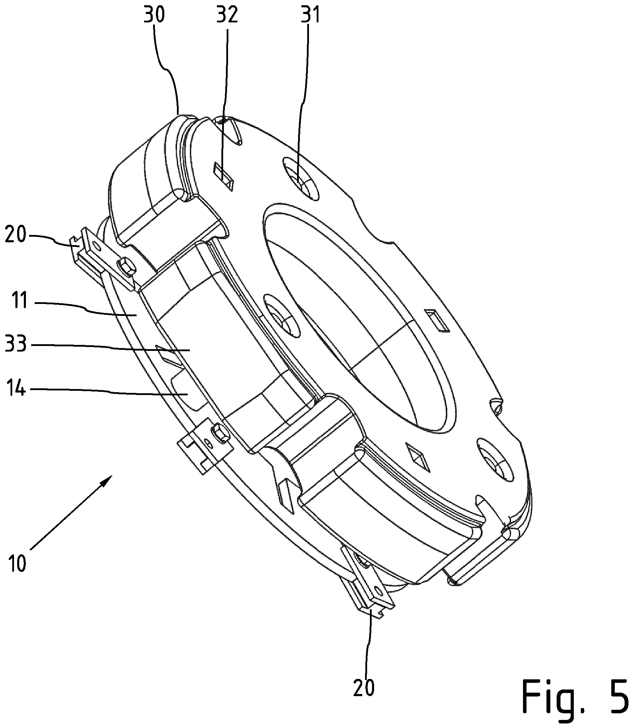

Figur 5 zeigt die Radgewichtadaptereinheit 10 mit einem angesetztem Radgewicht 30. Das Radgewicht 30 ist als ringförmiger Körper gebildet. Damit dieses bei der Lagerung, die vorzugsweise hochkant erfolgt, nicht wegrollt, besitzt es an gegenüberliegenden Abschnitten des Umfangs abgeplattete Abstellflächen 33. Durchgangsöffnungen 31 dienen zur Durchführung der Befestigungsschrauben zur Verbindung mit den Distanzelementen 14. Weitere Durchgangsöffnungen 32 ermöglichen die Durchführung weiterer Befestigungsschrauben, Gewindestangen o. ä., um mehrere Radgewichte 30 miteinander zu einem Paket zu kombinieren.

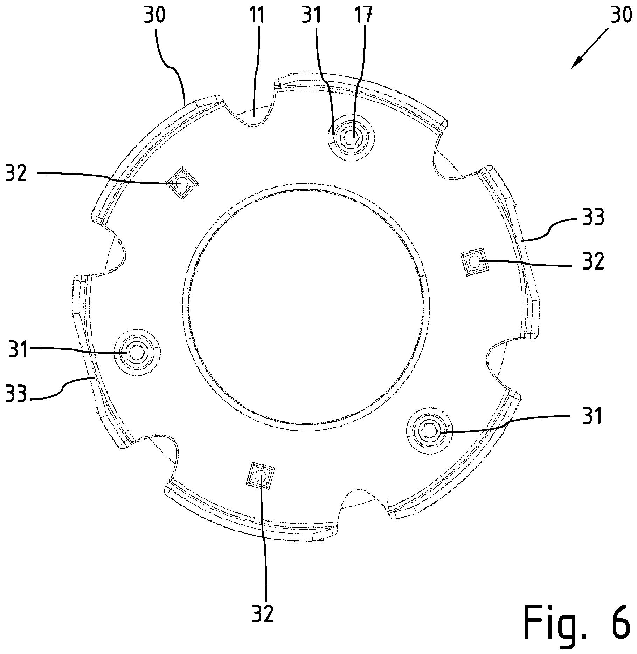

In Figur 6 ist die Radgewichtadaptereinheit 10 mit dem angesetztem Radgewicht 30 noch einmal in Draufsicht gezeigt. Dabei wird die Verteilung der drei Durchgangsöffnungen 31 für die Befestigungsschrauben 17 zur Verbindung mit den Distanzelementen und der auf gleichem Teilkreis jeweils dazwischen angeordneten Durchgangsöffnungen 32 zur Bildung eines Pakets deutlich.

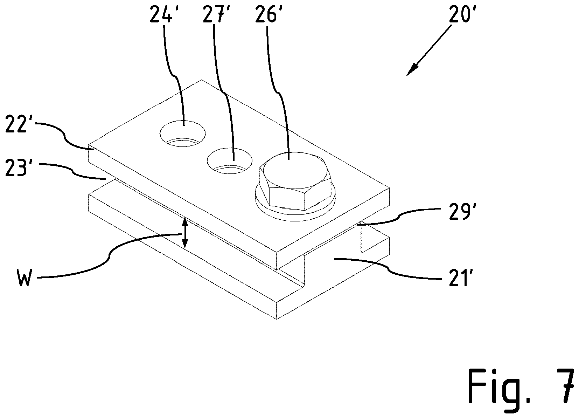

Figur 7 zeigt ein alternatives Schiebeelement 20' in einer perspektivischen Ansicht. Ein unteres Teilelement 21' besitzt die Querschnittsform eines Nutsteins, während das obere Teilelement 22' plattenförmig ist. Zwei Durchgangsbohrungen 24', 27' für die Durchführung der Befestigungsbolzen und eine Befestigungsbohrung für die Klemmschraube 26' erstrecken sich fluchtend durch beide Teilelemente 21', 22' hindurch. Die lichte Weite W einer seitlichen Führungsnut 23' entspricht der Blechstärke des Adapterelements 11 und ist so gewählt, dass zwischen dem unteren Teilelement 21' und dem oberen Teilelement 22' im Ausgangszustand des Schiebeelements 20' ein Spalt 29' besteht, damit beim Anziehen der Klemmschraube 26' eine Klemmwirkung zwischen den Teilelementen 21', 22' und der dazwischen eingeschlossenen Adapterplatte 11 erzielt werden kann.

Figur 8 zeigt die Adapterplatte 11 mit den inneren und äußeren Ausnehmungen 12, 13 und mehreren Schiebeelementen 20' in Draufsicht. Dabei ist:
- an einer 3-Uhr-Position das Schiebeelement 20' in eine innere Ausnehmung 13 eingesetzt, wobei die Klemmschraube 26' nach außen weisend angeordnet ist;
- an einer 6-Uhr-Position das Schiebeelement 20' in eine äußere Ausnehmung 12 eingesetzt, wobei die Klemmschraube 26' nach außen weisend angeordnet ist;
- an einer 9-Uhr-Position das Schiebeelement 20' in eine innere Ausnehmung 13 eingesetzt, wobei die Klemmschraube 26' zum Zentrum weisend angeordnet ist; und
- an einer 12-Uhr-Position das Schiebeelement 20' in eine äußere Ausnehmung 12 eingesetzt, wobei die Klemmschraube 26' zum Zentrum weisend angeordnet ist.

In allen Positionen befinden sich die Schiebeelemente 20' mit ihrer ganzen Länge in den Ausnehmungen 12, 13 und damit innerhalb der Kontur der Adapterplatte 11. Durch die jeweiligen mittleren Durchgangsbohrungen 27' in den Schiebeelementen 20' ergeben sich mindestens zwei zusätzliche Positionierungsmöglichkeiten der Schiebeelemente für die Befestigungsbolzen zur Radbefestigung, die in Figur 8 durch die beiden strichpunktierten Kreise markiert sind.

Figur 9 zeigt die Adapterplatte 11 mit den inneren und äußeren Ausnehmungen 12, 13 und mehreren Schiebeelementen 20' gemäß der zweiten Ausführungsform in Draufsicht. Eine schraffierte Ringzone 1 und eine schraffierte Kreiszone 2 im Zentrum markieren jeweils eine Zone am Rad, in der die Klemmschrauben 26' und weit heraus ragende Schiebeelemente nicht positionierbar sind, weil dort z. B. Luftventile, Achsstummel oder Teile einer Reifendruckregelanlage hervorstehen.

Die strichpunktierte Linie markiert den nicht veränderbaren Teilkreis 3 der Befestigungsbolzen für das mit der Radgewichtadaptereinheit auszurüstende Rad. Eine Verwendung der Schiebeelemente 20' auch zwischen den beiden Zonen 1, 2 ist möglich, indem die Klemmschrauben 26' außerhalb der Kontur der Adapterplatte 11 angeordnet werden und das Schiebeelement nur mit einem Teil seiner Länge in die inneren Ausnehmungen 13 eingreift. Dabei kann die bei der zweiten Ausführungsform des Schiebeelements 20' in einem mittleren Bereich zusätzlich vorhandene Durchgangsbohrung 27' auf dem Teilkreis 3 der Befestigungsbolzen platziert werden. Somit kann auch diese spezielle Anbringungssituation mit der universellen Radgewichtadaptereinheit der Erfindung gelöst werden, ohne dass ein individuelle Adapterplatte für das Rad gefertigt werden muss.

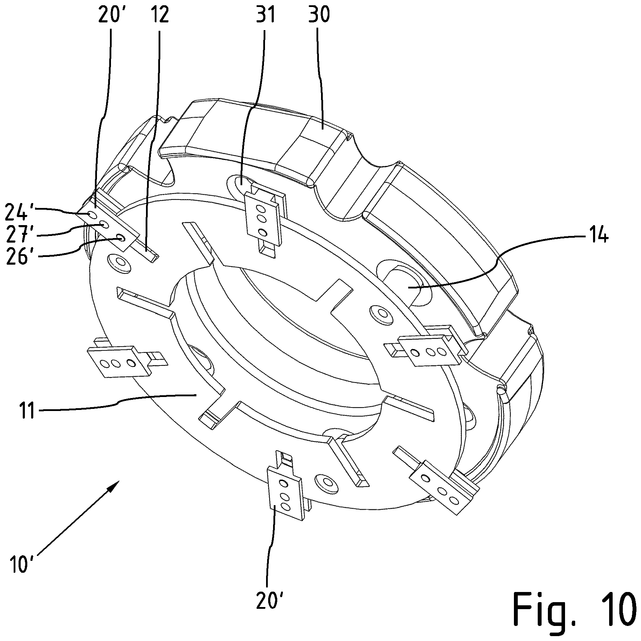

Figur 10 zeigt eine vollständige Radgewichteinheit in perspektivischer Seite von hinten, also von der Seite, die dem Rad zugewandt wird. Diese besteht aus einer Radgewichtadaptereinheit 10' mit einer Adapterplatte 11 und aus dem Radgewicht 30. Die Adapterplatte 11 ist identisch zur ersten Ausführungsform. In drei Durchgangsöffnungen 31 sind Befestigungsschrauben zur Verbindung mit den Distanzelementen 14 aufgenommen. Um einen großen Teilkreis für die Radbefestigung abzudecken, befinden sich die Schiebeelemente 20' jeweils nur mit ihren Klemmschrauben 26' in der nach außen offenen Ausnehmung 12, während sich ein Teil der Länge mit den beiden Durchgangsbohrungen 24', 27' außerhalb der Kontur der Adapterplatte 11 befindet.

## Patentansprüche

1. Radgewichtadaptereinheit (10; 10') für die Montage eines Radgewichts (30) an einem Nutzfahrzeug, wenigstens umfassend:
- eine Adapterplatte (11) mit wenigstens drei, sich radial erstreckenden Ausnehmungen (12. 13);
- mehrere Schiebeelemente (20; 20'), die jeweils radial versetzbar oder verschiebbar in den Ausnehmungen (12, 13) in der Adapterplatte (11) angeordnet sind und die jeweils wenigstens eine Durchgangsbohrung (24) zur Durchführung eines Befestigungsbolzens aufweisen;
- ein über die Adapterplatte (11) vorstehendes Distanzelement (14) mit je einer Befestigungsmittelaufnahme, an der das Radgewicht (30) befestigbar ist.

2. Radgewichtadaptereinheit (10; 10') nach Anspruch 1, **dadurch gekennzeichnet, dass** die Ausnehmungen (12) jeweils zwei zu einer radialen Mittellinie parallele Führungskanten aufweisen und dass die Schiebeelemente (20; 20') jeweils randseitige Führungsnuten (23; 23') aufweisen, in denen die Führungskanten geführt sind.

3. Radgewichtadaptereinheit (10; 10') nach Anspruch 1 oder 2, **dadurch gekennzeichnet, dass** alle Ausnehmungen (12) auf der Adapterplatte (11) in gleichmäßiger Winkelteilung und mit gleicher radialer Erstreckung angeordnet sind.

4. Radgewichtadaptereinheit (10; 10') nach einem der vorhergehenden Ansprüche, **dadurch gekennzeichnet, dass** die Adapterplatte (11) als plattenförmiger Kreisring ausgebildet ist.

5. Radgewichtadaptereinheit (10; 10') nach Anspruch 4, **dadurch gekennzeichnet, dass** sich mehrere Ausnehmungen (12) jeweils vom Außenumfang der Adapterplatte (11) aus radial nach innen erstrecken.

6. Radgewichtadaptereinheit (10; 10') nach einem der vorhergehenden Ansprüche, **dadurch gekennzeichnet, dass** sich mehrere Ausnehmungen (13) jeweils vom Innenumfang der Adapterplatte (11) aus radial nach außen erstrecken.

7. Radgewichtadaptereinheit (10; 10') nach Anspruch 5 und 6, **dadurch gekennzeichnet, dass** zwischen einem Paar von radial nach innen führenden Ausnehmungen (12) jeweils eine radial nach außen erstreckende Ausnehmung (13) angeordnet ist.

8. Radgewichtadaptereinheit (10; 10') nach Anspruch 4 bis 7, **dadurch gekennzeichnet, dass** die radiale Tiefe jeder Ausnehmung (12, 13) mehr als die Hälfte der radialen Breite des Kreisrings beträgt, der die Adapterplatte (11) bildet.

9. Radgewichtadaptereinheit (10; 10') nach einem der vorhergehenden Ansprüche, **dadurch gekennzeichnet, dass** die Schiebeelemente (20; 20') jeweils einen H-förmigen Querschnitt besitzen und an gegenüberliegenden Kanten Führungsnuten aufweisen, mit denen sie auf Führungskanten an den Ausnehmungen (13, 14) der Adapterplatte (11) verschiebbar geführt sind.

10. Radgewichtadaptereinheit (10; 10') nach einem der vorhergehenden Ansprüche, **dadurch gekennzeichnet, dass** die Schiebeelemente (20; 20') jeweils zumindest zweiteilig ausgebildet ist, wobei der Abstand zwischen parallelen Flächen an der Führungsnut kleiner ist als die Blechstärke der Adapterplatte (11) im Bereich der radialen Ausnehmungen (12, 13).

11. Radgewichtadaptereinheit (10; 10') nach einem der vorhergehenden Ansprüche, **dadurch gekennzeichnet, dass** die Schiebeelemente (20') wenigstens zwei Durchgangsbohrungen (24'; 27') und eine Gewindebohrung für eine Klemmschraube (26) aufweisen.

12. Radgewichtadaptereinheit (10; 10') nach einem der vorhergehenden Ansprüche, **dadurch gekennzeichnet, dass** die Distanzelemente (14) jeweils an ihrem von der Adapterplatte (11) abgewandten Ende kegelabschnittsförmig auslaufen.

13. Radgewichteinheit (10; 10') zur Anbringung an Nutzfahrzeugrädern, insbesondere Traktor-Hinterrädern, wenigstens umfassend:
- ein Radgewicht (30) und
- eine Radgewichtadaptereinheit (10; 10') nach einem der vorhergehenden Ansprüche.

14. Radgewichteinheit (10; 10') nach Anspruch 13, **dadurch gekennzeichnet, dass** das Radgewicht (30) an seiner der Radgewichtadaptereinheit (10; 10') zuzuwendenden Seite jeweils eine sich verjüngende Ausnehmung aufweist, die eine Durchgangsöffnung (31) zur Durchführung einer Befestigungsschraube umgibt, in welche Ausnehmung ein kegelabschnittsförmiges Ende des Distanzelements (14) einführbar ist.

15. Radgewichteinheit (10; 10') nach einem der Ansprüche 13 oder 14, **dadurch gekennzeichnet, dass** das Radgewicht (30) am Außenumfang jeweils wenigstens einen abgeplatteten Kantenabschnitt als Aufstandsfläche (33) aufweist.
